# EUROPEAN PATENT SPECIFICATION

(11) **EP 2 314 441 B1**
(45) Date of publication and mention of the grant of the patent: **15.08.2012**
(21) Application number: 09173981.3
(22) Date of filing: 23.10.2009
(51) Int. Cl.: B29C 53/58, B29C 53/66, B29C 70/32, B29C 53/80

(54) **Spiral winding system for manufacturing a composite component**
Spiralenwickelsystem zur Herstellung einer Verbundstoffkomponente
Système d'enroulement à spirale pour la fabrication d'un composant composite

(43) Date of publication of application: 27.04.2011
(73) Proprietor: General Electric Company, Schenectady, NY 12345 (US)
(72) Inventor: Witmer, Ryan, Cincinnati, OH 45246 (US); Braley, Michael Scott, Cincinnati, OH 45245 (US)
(74) Representative: Williams, Andrew Richard

(56) References cited:
- WO-A1-2005/108046
- DE-B- 1 086 880
- GB-A- 962 881
- US-A- 2 987 100
- US-A- 3 023 135
- US-A- 4 264 278
- US-A1- 2009 294 566
- US-A1- 2009 294 567
- US-B1- 6 655 633

## Description

### TECHNICAL FIELD

Embodiments described herein generally relate to spiral winding systems for making composite components. More particularly, embodiments herein generally describe automated spiral winding systems for making composite components such as gas turbine engine fan bypass ducts and containment casings for example.

### BACKGROUND OF THE INVENTION

In gas turbine engines, such as aircraft engines, air is drawn into the front of the engine, compressed by a shaft-mounted compressor, and mixed with fuel in a combustor. The mixture is then burned and the hot exhaust gases are passed through a turbine mounted on the same shaft. The flow of combustion gas expands through the turbine, which in turn spins the shaft and provides power to the compressor. The hot exhaust gases are further expanded through nozzles at the back of the engine, generating powerful thrust, which drives the aircraft forward.

In recent years composite materials have become increasingly popular for use in a variety of aerospace applications because of their durability and relative lightweight. Although composite materials can provide superior strength and weight properties, improvements can still be made.

Composite components, such as fan bypass ducts and containments casings for example, are currently fabricated using conventional layup methods such as filament winding, automated tape laying, and hand layup. Filament winding generally involves winding filaments under various amounts of tension over a mandrel in a desired pattern. This method allows for control of the orientation of the filaments so that successive layers can be oriented differently from the previous layer. Automated tape laying generally involves laying up a plurality of plies of tape at various angles to create a laminate. Hand layup generally involves manually positioning a woven fabric mat in a mold, applying resin thereto, and manually removing any air bubbles trapped between the plies of fabric. While all of these methods can be used successfully, such methods can often be time consuming, labor intensive, wasteful of material, and as a result, costly.

GB 962,881 discloses a spiral winding system where a roll of tape is wound about a mandrel 57. However, the system disclosed uses a tape slitting device to form lateral slits 101 in the tape prior to being applied to the mandrel.

US 6,655,633 B1 discloses apparatus for winding fibres 212 about a mandrel 206, but without any requirement for overlapping of successive layers of the fibres (see figure 9 of US 6,655,633 B1)

Accordingly, there remains a need for systems for making composite components that that are less time, material, and labor consuming and, therefore, more cost effective.

### BRIEF DESCRIPTION OF THE INVENTION

Accordingly, one aspect of the invention provides a spiral winding system for manufacturing a contoured composite component comprising: a creel for holding a triaxial material having a width and keeping the material straight to provide uniform overlaps during winding; a contoured curing mandrel for receiving the material to produce a spirally wound contoured composite component preform; and a traversing screw for spirally winding the material about the contoured curing mandrel such that each subsequent layer of the material overlaps by about half of the width; wherein the curing mandrel comprises a length and the traversing screw is positioned to lie along the length of the contoured curing mandrel; characterised in that: the spiral winding system further comprises a tensioning device for receiving the width of material from the creel, providing tension to the material during winding to help ensure uniformity of winding, and transferring the material to the mandrel; wherein the tensioning device is movable laterally along the traversing screw to produce a spirally wound contoured composite preform about the contoured curing mandrel.

Embodiments herein generally relate to spiral winding systems for manufacturing a contoured composite component comprising a creel for holding a triaxial material having a width and keeping the material straight to provide uniform overlaps during winding; a tensioning device for receiving the width of material from the creel and providing tension to the material during winding; a contoured curing mandrel for receiving the material from the tensioning device to produce a spirally wound contoured composite component preform; and a traversing screw for spirally winding the material from the tensioning device about the contoured curing mandrel such that each subsequent layer of the material overlaps by about half of the width wherein the contoured composite component comprises a cylindrical shape and non-crimp or braided material; a conical shape and non-crimp or braided material void of hoop fibers; or a combination thereof.

These and other features, aspects and advantages will become evident to those skilled in the art from the following disclosure.

### BRIEF DESCRIPTION OF THE DRAWINGS

There follows a detailed description of embodiments of the invention by way of example only with reference to the accompanying drawings, in which:
FIG. 1 is a schematic cross sectional view of one embodiment of a low bypass gas turbine engine in accordance with the description herein;
FIG. 2 is a schematic perspective view of one embodiment of a composite component in accordance with the description herein;
FIG. 3 is a schematic perspective view of one embodiment of a spiral winding system in accordance with the description herein; and
FIG. 4 is a schematic cross sectional view of one embodiment of a composite component made using the spiral winding system in accordance with the description herein.

>

### DETAILED DESCRIPTION OF THE INVENTION

Embodiments described herein generally relate to spiral winding systems for making composite components, and in particular, composite fan bypass ducts and containment casings, such as fan casings. More particularly, embodiments herein generally relate to automated spiral winding systems for making composite components using a spiral winding system including a creel, a tensioning device, a traversing screw and a curing mandrel as described herein below. Those skilled in the art will understand that although the embodiments herein focus on low bypass gas turbine engines, the description should not be limited to such.

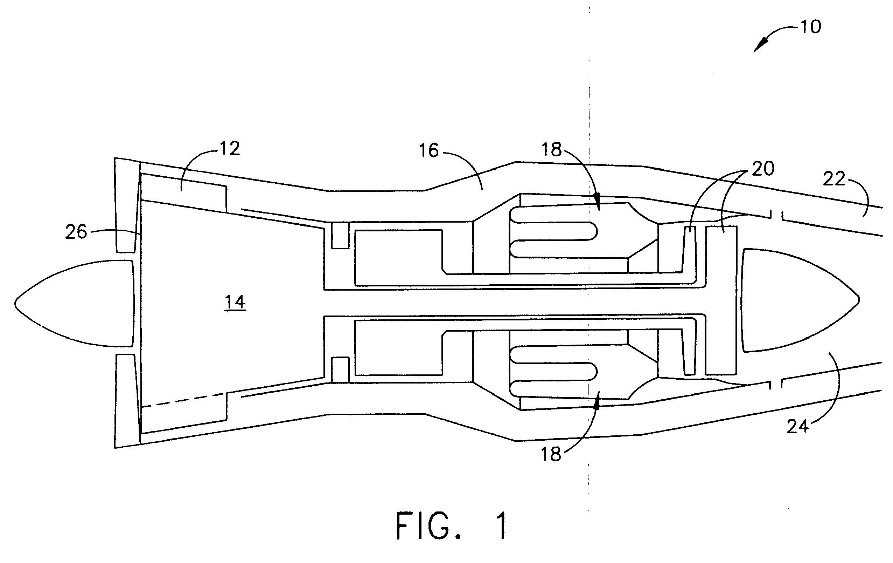

Turning to the figures, FIG. 1 is a schematic representation of one embodiment of a low bypass gas turbine engine 10 that generally includes a fan surrounded by a fan casing 12, a low pressure compressor 14, a fan bypass duct 16, burners 18, turbines 20, a fan exhaust 22, and a nozzle 24. In addition, engine 10 has an intake 26.

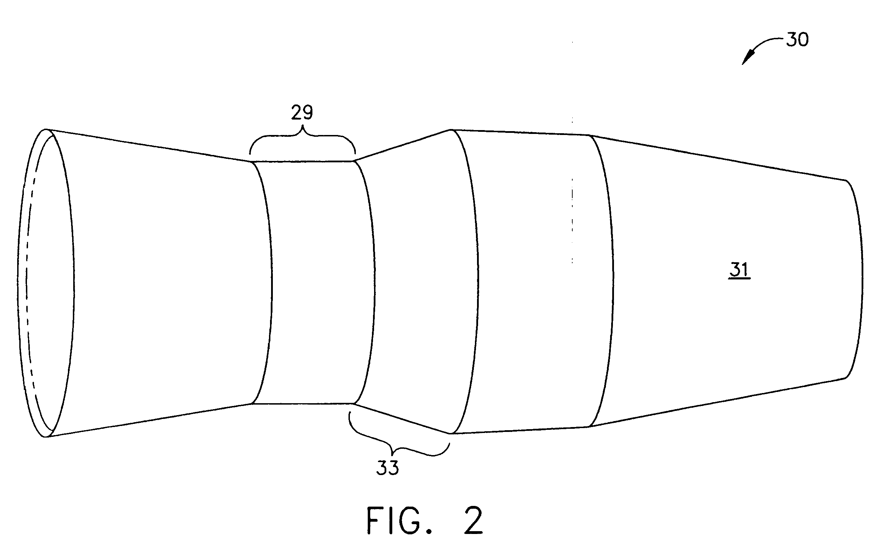

Referring to FIG. 2, one embodiment of an acceptable composite component 30 is shown. As used herein, "contoured composite component" refers to any structure having a contoured shape fabricated from a composite material or combination of composite materials. As used herein throughout, "contour(ed)" means at least a portion of the shape or surface is non-planar. In one embodiment, contour refers to any of a cylindrical shape, a conical shape, or some combination thereof. In one embodiment, composite component 30 may comprise a spirally wound fan bypass duct 31, though those skilled in the art will understand that the methods and systems described herein should not be limited to such. In another embodiment, composite component 30 may comprise a spirally wound containment casing such as a fan casing 12, as shown generally in FIG.l.

Bypass duct 31 may be fabricated as described herein below from a material 32 having fibers selected from the group consisting of carbon fiber, glass fiber, ceramic fiber, graphite fiber, aramid fiber, and combinations thereof. In one embodiment, composite component may comprise a cylindrical shape 29 and material 32 may comprise any triaxial non-crimp or braided material. In another embodiment, composite component can comprise a conical shape 31 and material 32 may comprise any triaxial non-crimp, or braided, material that is void of hoop (90°) fibers. The absence of hoop fibers can help the material conform to a conically shaped curing mandrel as described herein below. The following methods are equally applicable whether or not the material comprises hoop fibers.

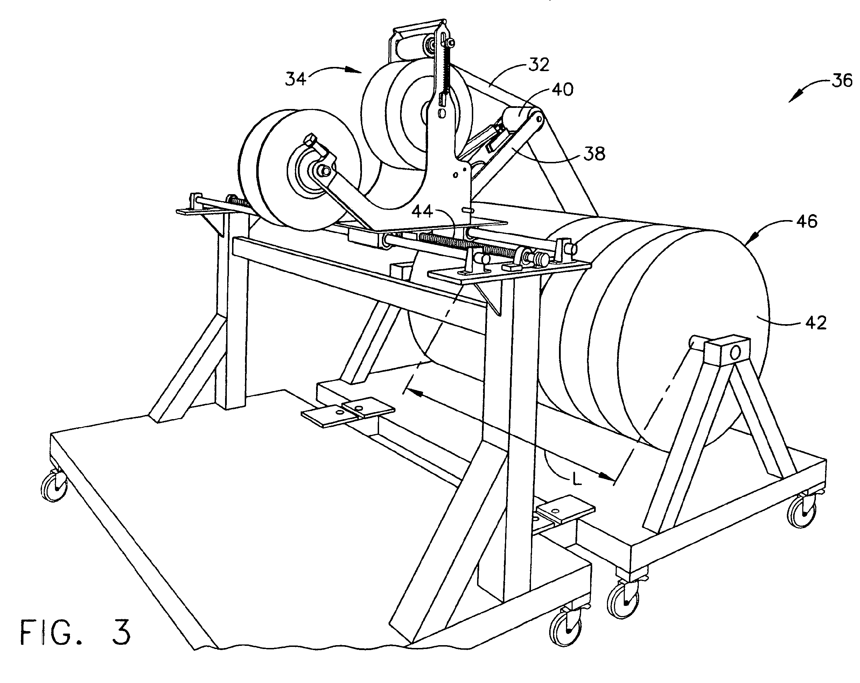

Initially, material 32 may be cut to a width W and spooled onto a creel 34 of a spiral winding system 36 as shown generally in FIG. 3. Material 32 can have a width W that can vary depending on need, however, in one embodiment, width W can be from about 4 inches (about 10.2 cm) to about 8 inches (about 20.3 cm). In one embodiment, creel 34 may have a width corresponding to the width W of material 32.

Once loaded onto creel 34, material 32 can be transferred through a tensioning device 38 with the aid of guide rollers 40 and wrapped about a curing mandrel 42 with the aid of a traversing screw 44. More specifically, material 32 can be transferred through tensioning device 38, which can apply needed tension to material 32 to help ensure uniformity. Tensioning device 38 may comprise anything capable of providing tension to the material. In one embodiment, tensioning device 38 may comprise a magnetic break on the creel. In another embodiment, tensioning device 38 8 may comprise a friction break attached to the creel.

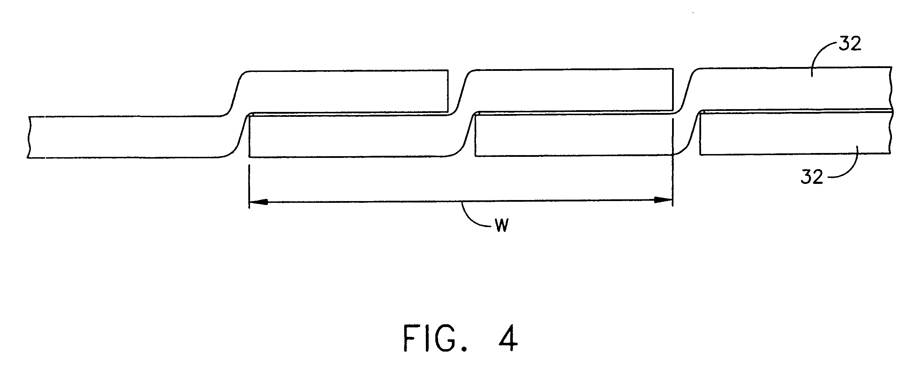

From tensioning device 38, material 32 can be wrapped about curing mandrel 46. In particular, material 32 may be spirally wound about curing mandrel 42. As used herein, "spirally wound" indicates that each subsequent layer of the material overlaps the previous layer by about half of width W of material 32. In this way, two layers of material 32 can be layed up about the curing mandrel concurrently. As an example, and as shown in FIG. 4, if material 32 has a width W of about 4 inches (about 10.2 cm), then each subsequent layer can overlap by about 2 inches (about 5.1 cm).

This desired overlap can be achieved using traversing screw 44, which as shown in FIG. 3, can be positioned to lie along a length L of curing mandrel 42. As each subsequent width W of material 32 is applied to mandrel 42, tensioning device 38 can move laterally along traversing screw 44 to achieve the desired spirally wound bypass duct preform 46.

Spirally wound bypass duct preform 46 may then be treated with any acceptable resin and cured using conventional infusion and curing techniques known to those skilled in the art to produce a spiral wound bypass duct 31.

Constructing a composite component having a spirally wound design as described previously herein can offer several benefits over current fabrications techniques. Spiral winding is an automated method that can provide the ability to quickly produce complex geometries using fabric that can be tailored to specific design needs. Moreover, spiral winding can replace labor intensive hand lay-up process, as well as material wastes from filament winding and single source braiding. Additionally, spiral winding can provide precise lay-ups, the ability to construct complex geometries, and the ability to make a component having any desired fiber orientation.

## Claims

1. A spiral winding system (36) for manufacturing a contoured composite component (30, 31) comprising:
a creel (34) for holding a triaxial material (32) having a width (W) and keeping the material straight to provide uniform overlaps during winding;
a contoured curing mandrel (42) for receiving the material to produce a spirally wound contoured composite component preform (46); and
a traversing screw (44) for spirally winding the material about the contoured curing mandrel such that each subsequent layer of the material overlaps by about half of the width;
wherein the curing mandrel (42) comprises a length (L) and the traversing screw (44) is positioned to lie along the length of the contoured curing mandrel;
**characterised in that**:
the spiral winding system further comprises a tensioning device (38) for receiving the width of material from the creel, providing tension to the material during winding to help ensure uniformity of winding, and transferring the material to the mandrel;
wherein the tensioning device is movable laterally along the traversing screw to produce a spirally wound contoured composite preform about the contoured curing mandrel.

2. A system (36) according to claim 1, wherein the triaxial material (32) comprises fibers selected from the group consisting of carbon fiber, glass fiber, ceramic fiber, graphite fiber, aramid fiber, and combinations thereof.

3. A system (36) according any of claims 1 or 2, wherein the material width (W) is from about 4 inches (about 10.2 cm) to about 8 inches (about 20.3 cm).

4. A system (36) according to any of claims 1, 2, or 3, wherein the tensioning device (38) is a magnetic break or a friction break.

5. A system (36) according to claim 3, wherein each subsequent layer of the material (32) overlaps by about 2 inches (about 5.1 cm).

6. A system (36) according to any of the preceding claims, wherein the contoured composite component preform (46) is treated with a resin and subsequently cured to produce the contoured composite component (30, 31).

7. A system (36) according to any of the preceding claims, wherein the contoured composite component (30) comprises a fan bypass duct (31).

## Patentansprüche

1. Spiralwickelsystem (36) zur Herstellung einer konturierten Verbundstoffkomponente (30, 31), aufweisend:
ein Spulengatter (34) zum Haltern eines triaxialen Materials (32) mit einer Breite (W) und zum Geradehalten des Materials, um gleichmäßige Überlappungen während des Wickelvorgangs zu erzeugen;
einen konturierten Härtungsdorn (42) zum Aufnehmen des Materials, um eine spiralförmig gewickelte konturierte Verbundstoffkomponentenvorform (46) zu produzieren; und
eine Verschiebespindel (44) zum spiralförmigen Wickeln des Materials um den konturierten Härtungsdorn dergestalt, dass jede nachfolgende Lage des Materials um etwa die Hälfte der Breite überlappt;
wobei der Härtungsdorn (42) eine Länge (L) aufweist und die Verschiebespindel (44) so positioniert ist, dass sie entlang des Längsverlaufs des konturierten Härtungsdorns liegt;
**dadurch gekennzeichnet, dass**:
das Spiralwickelsystem ferner eine Spannvorrichtung (38) zum Aufnehmen der Breite des Materials von dem Spulengatter, zum Erzeugen einer Spannung auf dem Material während des Wickelvorgangs, um zur Sicherstellung der Gleichmäßigkeit des Wickelvorgangs beizutragen, und zum Übertragen des Materials auf den Dorn aufweist; wobei die Spannvorrichtung seitlich entlang der Verschiebespindel bewegt werden kann, um eine spiralförmig gewickelte konturierte Verbundstoffvorform um den konturierten Härtungsdorn herum zu erzeugen.

2. System (36) nach Anspruch 1, wobei das triaxiale Material (32) Fasern aufweist, die aus der aus Kohlenstofffaser, Glasfaser, Keramikfaser, Graphitfaser, Aramidfaser und Kombinationen davon bestehenden Gruppe ausgewählt sind.

3. System (36) nach Anspruch 1 oder 2, wobei die Materialbreite (W) zwischen ca. 10,2 cm (4 Inches) und ca. 20,3 cm (8 Inches) liegt.

4. System (36) nach Anspruch 1, 2 oder 3, wobei die Spannvorrichtung (38) eine Magnetbremse oder eine Reibungsbremse ist.

5. System (36) nach Anspruch 3, wobei jede nachfolgende Lage des Materials (32) um ca. 5,1 cm (2 Inches) überlappt.

6. System (36) nach einem der vorstehenden Ansprüche, wobei die konturierte Verbundstoffkomponentenvorform (46) mit einem Harz behandelt und anschließend gehärtet wird, um die konturierte Verbundstoffkomponente (30, 31) zu produzieren.

7. System (36) nach einem der vorstehenden Ansprüche, wobei die konturierte Verbundstoffkomponente (70) einen Fan-Nebenstromkanal (31) umfasst.

## Revendications

1. Système d'enroulement en spirale (36) pour fabriquer une pièce composite profilée (30, 31), comportant :
un porte-bobines (34) servant à supporter une matière triaxiale (32) ayant une largeur (W) et à maintenir rectiligne la matière afin de réaliser des chevauchements uniformes pendant l'enroulement ;
un mandrin de durcissement profilé (42) destiné à recevoir la matière pour produire une ébauche (46) de pièce composite profilée enroulée en spirale ; et
une barre de déplacement filetée (44) pour enrouler la matière en spirale autour du mandrin de durcissement profilé de façon que chaque nouvelle couche de la matière soit chevauchante sur environ la moitié de la largeur ;
le mandrin de durcissement (42) ayant une longueur (L) et la barre de déplacement filetée étant placée pour se trouver le long du mandrin de durcissement profilé ;
**caractérisé en ce que** :
le système d'enroulement en spirale comporte en outre un dispositif de tension (38) destiné à recevoir la largeur de la matière provenant du porte-bobines, assurer une tension de la matière pendant l'enroulement pour contribuer à assurer l'uniformité de l'enroulement, et transférer la matière jusque sur le mandrin, le dispositif de tension étant mobile latéralement le long de la barre de déplacement filetée afin de produire autour du mandrin de durcissement profilé une ébauche de pièce composite profilée enroulée en spirale.

2. Système (36) selon la revendication 1, dans lequel la matière triaxiale (32) comprend des fibres choisies dans le groupe constitué des fibres de carbone, des fibres de verre, des fibres de céramique, des fibres de graphite, des fibres aramides et des combinaisons de celles-ci.

3. Système (36) selon l'une quelconque des revendications 1 et 2, dans lequel la largeur (W) de matière est d'environ 10,2 cm (environ 4 ") à environ 20,3 cm (environ 8 ").

4. Système (36) selon l'une quelconque des revendications 1, 2 et 3, dans lequel le disposition de tension (38) est un frein magnétique ou un frein à friction.

5. Système (36) selon la revendication 3, dans lequel chaque nouvelle couche de la matière (32) est chevauchante sur environ 5,1 cm (environ 2 ").

6. Système (36) selon l'une quelconque des revendications précédentes, dans lequel l'ébauche (46) de pièce composite profilée est traitée avec une résine, puis durcie pour produire la pièce composite profilée (30, 31).

7. Système (36) selon l'une quelconque des revendications précédentes, dans lequel la pièce composite profilée (30) constitue un conduit de dérivation (31) de soufflante.
